# FASCICULE DE BREVET EUROPEEN

(11) **EP 1 230 069 B1**
(45) Date de publication et mention de la délivrance du brevet: **06.10.2004**
(21) Numéro de dépôt: 00990599.3
(22) Date de dépôt: 06.11.2000
(51) Int. Cl.: B24C 1/04

(54) **FAçONNAGE DE VITRAGES**
FORMENDE BEARBEITUNG VON GLASSCHEIBEN
SHAPING GLASS PANELS

(30) Priorité: 08.11.1999 BE 9900725
(43) Date de publication de la demande: 14.08.2002
(73) Titulaire: Glaverbel, 1170 Bruxelles (Watermael-Boitsfort) (BE)
(72) Inventeur: LEGRAND, Denis, F-59144 Wargnies (FR); LUCCA, Nerio, B-6220 Fleurus (BE); TAUPIN, Pierre, F-59600 Maubeuge (FR)
(74) Mandataire: Le Vaguerèse, Sylvain
(86) Numéro de dépôt international: PCT/EP2000/011234
(87) Numéro de publication internationale: WO 2001/034347

(56) Documents cités:
- DE-A- 4 324 847
- FR-A- 2 570 637
- US-A- 3 012 924
- US-A- 4 865 919
- US-A- 5 295 425

## Description

La présente invention concerne un procédé de fabrication de vitrages feuilletés bombés selon le préambule de la revendication 1.

La pratique est de forer les trous de petites dimensions, ou de ménager des ouvertures, par découpe sur les feuilles de verre planes, et ensuite de procéder au bombage puis à l'assemblage des feuilles avec un intercalaire, selon les techniques usuelles dans ce domaine. L'avantage de procéder selon cette séquence, vient de ce que les contraintes résultant des traitements thermiques liés aux opérations de bombage, se développent sur un produit qui ultérieurement, ne subit plus d'altérations de ses surfaces. L'équilibre des contraintes que ces surfaces présentent n'est donc pas rompu. Les risques de casse sont ainsi limités. C'est en considération de cet avantage que toute reprise de façonnage après bombage et assemblage est normalement évitée.

La séquence indiquée ci-dessus n'est pas exempte d'inconvénients. Le bombage des feuilles comportant des trous dans la zone bombée, conduit à des déformations locales irrégulières. Les trous ne sont pas soumis aux mêmes effets que le reste de la feuille, et leurs bords peuvent être légèrement en saillie par rapport à la surface de la feuille. Cette déformation est d'autant plus marquée que la feuille est plus épaisse et est incurvée selon un rayon plus petit. Même pour les grands rayons de courbure la différence de niveau est perceptible en vision rasante. La distorsion optique correspondante n'est pas acceptable pour certaines applications, indépendamment des conséquences sur les propriétés mécaniques qui peuvent l'accompagner.

La géométrie des trous situés dans les parties incurvées est aussi modifiée lors du bombage. En pratique, les trous essentiellement cylindriques ménagés dans les feuilles planes, sont déformés, nécessitant par exemple de prévoir des dimensions initiales supérieures pour respecter les cotes de passage requises. La déformation des trous conduit aussi à des formes insuffisamment précises pour certaines utilisations. Par ailleurs, la formation des trous avant bombage conduit à un positionnement moins précis de ceux-ci in fine, ce qui nécessite encore de prévoir des tolérances plus grandes pour les trous en question.

Si individuellement les feuilles présentent les défauts énoncés ci-dessus, l'assemblage de ces feuilles dans un vitrage feuilleté comporte bien évidemment les défauts des feuilles qui le composent. Il s'y ajoute les défauts spécifiques que l'assemblage des feuilles occasionne. Ainsi, si le perçage est exécuté au même endroit sur les deux feuilles planes , après bombage les trous ne sont plus coaxiaux. Comme précédemment, dans l'établissement des dimensions des trous de chaque feuille, il faut tenir compte du fait que la déformation conduit à un trou non parfaitement cylindrique, mais aussi du fait, qu'après bombage, les deux trous ne sont plus exactement en regard l'un de l'autre.

Les inventeurs ont montré que la difficulté de procéder au façonnage , et en particulier au forage de trous dans les parties incurvées d'un vitrage préalablement bombé et feuilleté, pouvait être surmontée en opérant au moyen de jets de fluides sous très forte pression.

Les difficultés mécaniques, et en particulier le risque de casse lors du façonnage de vitrages feuilletés bombés, sans être complètement écartés, peuvent être suffisamment limités pour permettre l'application de l'invention de manière industrielle.

L'utilisation de jets de fluides comme moyen de découpe est parfaitement connue de l'art antérieur. Ce type de découpe est appliqué aux matériaux les plus variés : tissus, plastiques, pierre et même verre pour la découpe selon des tracés complexes. Dans ces dernières applications le fluide est le plus souvent de l'eau chargée d'une poudre abrasive pour éroder ces matériaux relativement durs. Des publications décrivant des techniques représentatives sont en particulier celles de la série FR 2 570 636, ..637 et ..638. Ces publications font notamment état de découpes de feuilles de verre selon des tracés complexes telles que celles destinées à constituer des vitrages latéraux d'automobiles.

La connaissance de ces moyens de découpe n'a pas néanmoins conduit à leur utilisation sur des vitrages préalablement feuilletés bombés, en raison probablement de la crainte des ruptures possibles des feuilles de verre, ou celle de conduire à une délamination de l'ensemble feuilleté au cours du traitement.

Il est également connu de DE 43 24 847 A, de procéder à la découpe d'éléments entrant dans la composition de toits vitrés, ces éléments étant juxtaposés les uns à côté des autres pour constituer le toit, la découpe des éléments sur l'ensemble des verres préalablement bombés permettant d'éviter des écarts entre les éléments juxtaposés.

Le procédé selon l'invention est défini à la revendication 1.

Les essais conduits par les inventeurs montrent que le façonnage de trous, ou d'ouvertures de grandes dimensions, pouvait être réalisé sans risques excessifs à condition de respecter des précautions qui ne sont pas plus contraignantes que celles qu'impose le façonnage traditionnel effectué sur les feuilles planes. En particulier comme il sera indiqué dans la suite, il est souhaitable de localiser les trous et les ouvertures à une certaine distance des bords des feuilles, pour éviter les zones de plus fortes contraintes, et donc les risques d'amorce de ruptures.

Les fluides utilisés pour constituer les jets sont le plus souvent de l'eau, avantageusement déminéralisée pour limiter l'usure des buses de projection. Compte tenu de la fragilité des verres il est préférable de modifier l'action de l'eau en introduisant une poudre abrasive . Celle-ci améliore encore la précision de la découpe, et évite la formation de fissures. La poudre abrasive est constituée par exemple de silice , de quartz, de corindon, de zircon ou de produits de dureté analogue, dont les grains sont de quelques dixièmes de millimètres, par exemple de 0,1 à 0,8mm.

La pression mise en oeuvre est de l'ordre de grandeur de celle utilisée avec les matériaux durs et suffisamment épais. En effet, les vitrages feuilletés traités selon l'invention peuvent atteindre jusqu'à 16mm et plus. Le plus fréquemment néanmoins leur épaisseur se situe entre 4 et 10mm. Les appareillages proposés dans le commerce pour équiper les lignes de traitement peuvent développer une pression dépassant 400Mpa. Pour les applications de découpe selon l'invention, la pression mise en oeuvre est de préférence de l'ordre de 150 à 350Mpa lorsque le jet traverse le vitrage. Elle est moins élevée au début du traitement tant que le jet est arrêté par le vitrage. La pression est alors maintenue avantageusement à une valeur de l'ordre de 50 à 150Mpa jusqu'au percement du vitrage.

Le choix de maintenir la pression relativement basse au début de la découpe permet d'éviter une abrasion sur une largeur plus importante. Le jet en s'écrasant entraîne une érosion sur une plus grande surface. Pour avoir une attaque uniforme sur le pourtour de la découpe il faut une abrasion moins vigoureuse au début. En dehors de la précision de la découpe, les différences d'attaque peuvent être la cause d'amorce de rupture, ou d'arrachage d'écailles à la surface du verre.

Les dimensions des jets, de l'ordre de quelques dixièmes de millimètres, permettent d'atteindre une précision de coupe au moins aussi bonne que par les moyens mécaniques traditionnels. Cette précision peut atteindre le dixième de millimètre. Par ailleurs l'abrasion des bords de coupe constitue un premier traitement de ces bords. Le cas échéant il n'est pas nécessaire de compléter le rodage ainsi réalisé. Il est bien entendu possible de compléter ce traitement suivant les modes usuels.

L'efficacité des jets dans ce mode de découpe implique que les buses soient localisées à proximité immédiate de l'objet traité. La distance est ordinairement de l'ordre de quelques millimètres pour conserver au jet les dimensions les plus voisines possibles de celles qu'il présente à l'émission. Même si l'épanouissement est faible, il occasionne une perte de vitesse et donc d'énergie, perte de vitesse qui s'augmente du ralentissement au contact de l'atmosphère environnante.

En fonction de cette nécessité de maintenir l'émission du jet aussi voisine que possible de la surface du vitrage à découper, et de la courbure du vitrage, il est avantageux d'asservir le mouvement relatif de la buse de projection du jet et de la surface découpée de telle sorte que la distance soit maintenue constante. Si la découpe envisagée est complexe, le mouvement relatif est avantageusement effectué à l'aide d'un robot à commande numérique permettant des mouvements dans les trois dimensions. S'il s'agit du percement de trous dont les dimensions sont relativement faibles, ou si le bombage du vitrage suit un rayon de courbure très important, on comprend que la buse de projection du fluide peut se déplacer dans un plan sans que la distance au vitrage traité varie de façon telle que la découpe soit altérée. Dans la pratique un écart de 1 à 2mm de la distance de la buse à la surface du vitrage est habituellement acceptable.

Comme indiqué précédemment, le percement et la découpe de trous ou d'ouvertures de grandes dimensions dans les feuilles de verre, éventuellement durcies, doit tenir compte des contraintes présentes dans ces feuilles. Celles-ci sont les plus élevées sur les bords des feuilles. Pour éviter les cassures ou même l'éclatement des feuilles il convient de pratiquer la découpe hors de ces zones de fortes contraintes.

Les manuels de verrerie donnent des indications pratiques sur les dispositions et les dimensions à respecter en fonction notamment de l'épaisseur de la feuille, de la dimension du trou, de la proximité d'autres ouvertures...Ce type d'indication s'applique également aux découpes selon l'invention.

L'invention est décrite de façon plus détaillée dans la suite en faisant référence aux planches de dessins dans lesquelles :
- les figures 1a et 1b sont des représentations schématiques en coupe d'un mode de réalisation antérieur ;
- la figure 2 est une représentation analogue à celle de la figure 1 d'un vitrage obtenu selon l'invention ;
- la figure 3 est une illustration schématique du résultat d'un percement d'une feuille de verre par des moyens traditionnels ;
- la figure 4 montre les éléments à considérer dans la localisation des trous pratiqués dans une feuille de verre ;
- la figure 5 représente en perspective et coupe partielle, une application d'un vitrage selon l'invention constituant d'un toit d'un véhicule recevant des barres de fixation ;
- la figure 6 est la représentation d'une ouverture pratiquée selon l'invention dans un toit vitré, pour l'implantation d'éléments fonctionnels ;
- la figure 7 illustre le mode d'assemblage des éléments de vitrage tels que ceux de la figure 6.

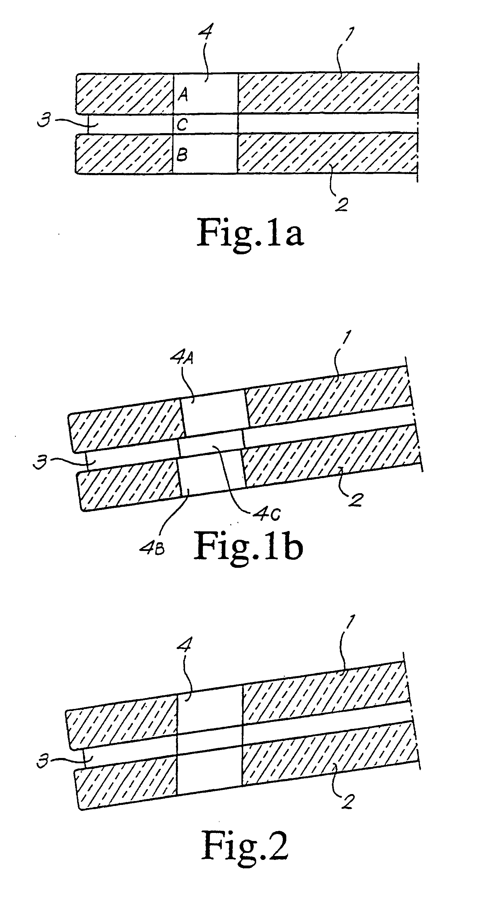

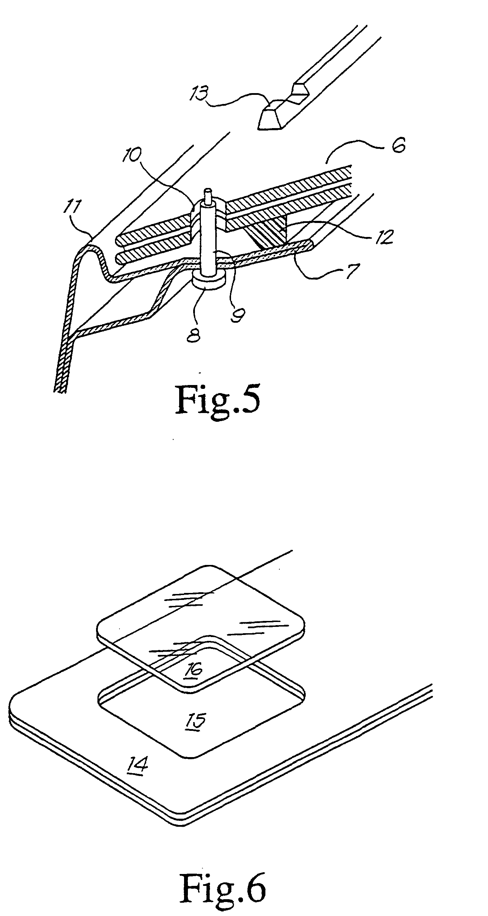

La figure 1a présente un ensemble constitué de deux feuilles de verre 1 et 2, et d'une feuille intercalaire 3, d'un matériau traditionnel tel que du PVB (polyvinylbutyral). Dans cette présentation les feuilles sont superposées avant d'être assemblées les unes aux autres. Chaque feuille a été préalablement percée d'un trou de même diamètre. Les trous sont disposés de telle sorte qu'ils sont les uns en face des autres lorsque les feuilles sont superposées comme à la figure 1a. La mise en forme ultérieure par bombage et collage des feuilles conduit à un assemblage schématisé à la figure 1b. Cet assemblage comporte un décalage léger des axes des trous 4a, 4b et 4c dans les différentes feuilles. De plus , l'axe des trous reste sensiblement de direction radiale par rapport à l'incurvation des feuilles. Cette direction n'est pas nécessairement celle qui est recherchée dans le vitrage final. Dans le mode présenté à la figure 5, correspondant au vitrage formant le toit d'un véhicule, la direction des trous doit être globalement verticale alors que du fait du bombage, le bord du vitrage n'est pas horizontal, mais légèrement incliné. En conséquence l'axe du trou fait un angle léger avec la direction radiale de courbure.

La figure 2 illustre le type de trou obtenu en procédant au percement selon l'invention. L'opération étant conduite après bombage et assemblage des feuilles, la géométrie du trou est celle que l'on impose au moment du percement. Il en résulte un alignement exact des axes, et une parfaite continuité des parois du trou au travers des différentes feuilles.

Il faut remarquer à propos des techniques antérieures qu'elles présentent encore d'autres inconvénients. En particulier le percement de trous dans des feuilles relativement minces n'est pas très commode. Dans le mode le plus usuel ce mode effectué au moyen de forets requiert que, pour chaque trou, les deux faces de la feuille de verre soient attaquées. Le percement par forage unilatéral conduirait à un trou irrégulier sur la face opposée à celle attaquée par le foret. Le risque est d'arracher des écailles, ou de favoriser l'amorce de fissures. L'attaque simultanée des deux faces nécessite une épaisseur suffisante de verre, de telle sorte que la jonction des deux forages se fasse à une certaine distance de chacune des faces. En travaillant des feuilles minces, le risque est que l'on ne puisse pas éviter cet inconvénient, faute d'une précision adéquate sur les mouvement des forets.

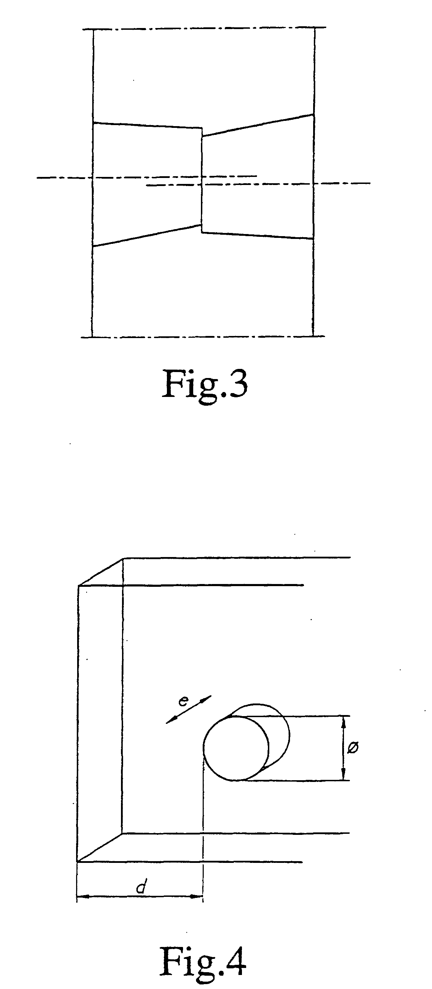

La figure 3 montre les défauts qui se produisent lors du percement de trous au moyen de forets même quand on dispose d'une feuille de verre d'épaisseur suffisante. Sur cette figure la feuille est supposée relativement épaisse (au moins 3 à 4 mm). Les deux faces de la feuille sont attaquées simultanément de sorte que la jonction s'effectue à distance de chaque face, autrement dit en dehors des zones où les contraintes risquent de conduire à des fissurations ou à l'arrachage d'écailles.

La figure 3 illustre une autre difficulté du mode de percement traditionnel. La forme des trous montre une légère conicité liée à l'usure inévitable des forets. Par ailleurs il est difficile de parvenir à une parfaite coaxialité des deux percements. Tout ceci conduit à des trous qui, sur chaque feuille, et d'autant plus que ces feuilles sont plus minces, présentent certaines irrégularités.

Le mode de percement et découpe réalisé selon l'invention, conduit d'une part à des trous qui sur chaque feuille présentent une grande régularité, et d'autre part, sur les assemblages feuilletés et bombés, évite toutes les difficultés énoncées précédemment de défaut d'alignement, d'inclinaison des axes etc.

Comme indiqué précédemment, le percement et la découpe de trous ou d'ouvertures dans les vitrages doit respecter des règles connues pour éviter les risques de casse. La figure 4 montre pour une feuille de verre d'épaisseur e, un trou de diamètre ø, la distance d qui doit séparer le bord de la feuille de celui du trou. Ainsi pour un trou circulaire, le diamètre du trou est avantageusement supérieur à l'épaisseur de la feuille. De même, la distance au bord le plus proche de la feuille est fonction du diamètre du trou. Pour un diamètre inférieur à 50mm, la distance au bord de la feuille, ou à une autre ouverture, ne doit pas être inférieure à deux fois l'épaisseur de la feuille. Pour un diamètre supérieur à 50mm, la distance au bord de la feuille ne doit pas être inférieure au demi diamètre du trou.

Les mêmes règles s'appliquent au cas d'ouvertures de dimensions plus importantes, et qui peuvent présenter les formes les plus variées. De façon générale, comme indiqué, le principe est de disposer les ouvertures à une distance suffisante du bord de la feuille pour qu'elles se situent hors des zones de fortes contraintes superficielles.

La figure 5 illustre l'application de l'invention à un vitrage feuilleté formant le toit d'un véhicule.

Dans cet exemple le vitrage feuilleté est par exemple constitué de deux feuilles de verre d'épaisseurs respectives 3,9 et 2,1mm collées l'une à l'autre par un intercalaire PVB de 0,76mm. Sur ses bords le vitrage présente un rayon de courbure de l'ordre de 50cm. Cette courbure n'est pas uniforme sur toute la largeur du vitrage. Dans la zone médiane le rayon de courbure est d'environ 120cm. Les trous pratiqués sont circulaires et de 16mm de diamètre. Ils sont situés à 35mm du bord du vitrage, satisfaisant aux conditions requises pour prévenir le risque de casse. Le percement est effectué dans un premier temps à la pression de 100MPa, et la découpe du trou après percement est poursuivie à 300MPa. Le jet est chargé de poudre de corindon. Le temps de découpe est de l'ordre de 18 secondes.

Le mode représenté correspond à une demande actuelle des stylistes automobile. Le vitrage formant le toit s'étend de la façon la plus large possible. Sur la figure 5 le vitrage feuilleté et bombé 6 vient jusqu'au bord du toit matérialisé par l'élément de carrosserie 11. Compte tenu de cette configuration, tout élément qui doit être placé sur le toit, sans reposer sur le vitrage, nécessite un aménagement du type représenté. C'est par exemple ce qu'impose la présence de barres de fixation telles que celles que l'on trouve sur de nombreux véhicules de type « break ». Pour ce type d'application, la sollicitation mécanique sur les barres ne permet pas la fixation sur le vitrage du toit. Les efforts doivent porter sur la structure métallique. La solution est de faire en sorte que les moyens de fixation puissent traverser le vitrage. A cet effet des trous 10 sont ménagés dans le vitrage selon la technique de l'invention.

Le vitrage est percé de trous cylindriques dont l'axe est sensiblement vertical. Ces trous sont situés dans l'alignement de l'emplacement de la fixation sur la structure métallique 7.

Dans le montage présenté, le vitrage n'est pas mis en contact avec les moyens de fixation 9, tels qu'un goujon dont la base 8 est par exemple soudée à la structure 7 de la carrosserie du véhicule. Le cas échéant pour éviter tout contact avec ces moyens de fixation, et écarter les risques de friction sur un élément dur susceptible d'amorcer une fissure, un manchon en un matériau résilient, non représenté, peut être interposé entre le goujon 9 et les parois du trou 10.

La figure 5 ne montre que le bord du vitrage correspondant par exemple au côté du véhicule. Le toit formé du vitrage 6 repose sur la structure métallique 7. Dans la forme présentée le vitrage est collé sur la structure métallique par un cordon d'adhésif 12. Selon les techniques usuelles dans ce domaine de la fixation des vitrages automobile, le cordon d'adhésif peut aussi assurer l'étanchéité du toit.

Les moyens de fixation 9 n'étant pas en contact avec le vitrage, pour éviter d'endommager ce dernier, l'étanchéité ne peut être assurée au niveau du trou. Pour garantir cette étanchéité, les trous de fixation sont disposés à l'extérieur de la zone du toit délimitée par le joint d'étanchéité, ou par le cordon d'adhésif 12 remplissant ce rôle.

La barre de toit schématisée en 13, vient se fixer sur les moyens 9 sans entrer en contact avec le toit.

Dans ce type de montage il est préférable de disposer une lèvre de finition entre le bord 11 de la carrosserie et celui du vitrage 6, afin d'éviter l'accumulation de débris divers sous le vitrage, et aussi les sifflements occasionné par les écoulements aérodynamiques. Elle n'est pas destinée à maintenir l'étanchéité. Cette lèvre, non représentée est de type usuel et en matériau élastomère.

L'application de l'invention ne se limite pas aux toits des véhicules. Tout vitrage présentant les mêmes caractéristiques est susceptible de faire l'objet de cette mise en oeuvre. Il s'agit par exemple du percement de trous dans des vitrages latéraux feuilletés et bombés, ou de tout autre vitrage y compris en dehors du domaine automobile. Le cas des vitrages latéraux est particulièrement intéressant dans la mesure où les feuilles constituant ces vitrages sont souvent très minces, et pour cette raison ne permettent pas un percement de trous selon les techniques traditionnelles. Les épaisseurs pour ces vitrages sont par exemple de 2,1 ou même 1,8mm. Le percement selon l'invention permet d'obtenir des trous exempts d'amorce de rupture même sur de verres aussi minces.

La figure 6 est une illustration de l'utilisation de l'invention pour l'aménagement d'un toit vitré comportant deux zones de fonctionnalités différentes. Dans le mode présenté, une large découpe 15 est pratiquée selon l'invention dans le toit feuilleté et bombé 14.

Un exemple est réalisé sur un vitrage du même type qu'à l'exemple précédent. La découpe est effectuée selon les mêmes principes. Elle progresse à la vitesse de 30cm/mn après le percement initial. La périphérie de la découpe se situe à 10cm des bords du vitrage.

L'avantage de produire la découpe après bombage et assemblage du vitrage feuilleté est d'autant plus sensible que la partie du vitrage demeurant après découpe est plus étroite. L'encadrement restant est en effet très sensible aux déformations de toutes sortes. En procédant à l'assemblage avant la découpe , les risques de gauchissement notamment, sont pratiquement inexistants.

L'ouverture découpée peut recevoir un élément 16 de dimensions correspondantes, formé indépendamment, et présentant des caractéristiques fonctionnelles particulières. Cet élément est vitré ou non selon les applications envisagées. Par exemple, le toit peut offrir un ensemble de transmissions énergétique et lumineuse très réduites pour lutter contre l'échauffement de l'habitacle tout en réservant une zone dont la transmission lumineuse et/ou énergétique est plus élevée. C'est par exemple l'introduction dans un toit vitré d'un ensemble de cellules photovoltaïques portées par une feuille de verre à forte transmission énergétique Dans ce cas la feuille portant les cellules est découpée selon le même profil que celui de la découpe du toit vitré. Cette feuille représentée à la figure 6 par la référence 16, peut être placée dans l'ouverture 15, et fixée au vitrage 14.

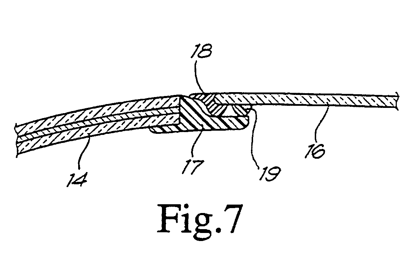

La figure 7 montre un mode d'assemblage faisant suite à la découpe d'un vitrage feuilleté bombé. Le vitrage 14, découpé selon le mode proposé par l'invention, est pourvu sur toute la périphérie de la zone découpée d'un joint profilé 17 en matériau polymère tel que du polyuréthanne. De la même façon l'élément rapporté 16, représenté aux figures 6 et 7 par une feuille de verre, porte sur sa périphérie un joint 18 dont le dessin est choisi pour être complémentaire du joint 17. Un cordon de colle 19 permet de fixer la feuille 16.

Plus encore que le simple fait de composer un vitrage comportant deux zones présentant des caractéristiques différentes, le type de découpe illustré à la figure 6, et l'assemblage de la figure 7, peuvent servir à introduire des éléments fonctionnels supplémentaires. Il s'agit par exemple de disposer par ce moyen d'un ensemble de cellules photovoltaïques associées à une feuille de verre présentant une très bonne transmission énergétique. Si en effet les toits vitrés doivent filtrer autant que possible l'énergie rayonnée pour éviter l'échauffement de l'habitacle, l'efficacité des cellules photovoltaïques disposées dans le toit d'un véhicule est d'autant meilleure que la transmission énergétique de la feuille de verre qui les recouvre est plus élevée. La difficulté qu'il y a à satisfaire simultanément ces exigences contradictoires peut être levée par la mise en oeuvre selon l'invention.

Dans les dispositions qui viennent d'être présentées d'insertion d'éléments rapportés dans un toit vitré feuilleté, l'utilisation de la découpe proposée par l'invention, non seulement permet d'éviter les risques de déformations mécaniques liées à des traitements thermiques exécutés sur des pièces complexes, ainsi que les défauts optiques qui en résultent, mais encore permet un ajustement très précis de l'élément inséré. On a souligné en effet que les découpes peuvent être extrêmement précises. L'élément rapporté peut présenter la même précision dimensionnelle s'il est obtenu selon la même technique, autrement dit, lorsqu'il s'agit d'une feuille de verre, en procédant à sa découpe à l'aide de jets sous haute pression. Le profil est d'autant mieux ajusté dans ce cas, que le même robot, suivant le même programme peut être utilisé pour la découpe du vitrage constituant le toit et pour celle de la feuille rapportée. Le jeu entre ces deux éléments peut alors être déterminé pour correspondre exactement à ce qui est nécessaire pour la mise en place d'un ensemble de moyens de fixation tels que ceux représentés à la figure 7. Dans ce mode, l'écart existant entre les extrémités du vitrage 14 et de la feuille 16 peut être de quelques millimètres. En pratique, la précision des découpes selon l'invention n'introduit pas de limite à la proximité de ces éléments. La distance est fixée par d'autres nécessités comme celle de devoir prévenir tout frottement des feuilles les unes sur les autres, ce qui impose une certaine distance qui tient compte par exemple des déformations élastiques que peut subir la structure du véhicule dans son usage normal.

L'exemple de l'insertion d'un élément rapporté n'épuise pas les modes d'utilisation de découpe selon l'invention. Un autre usage important est constitué par la réinsertion de la partie préalablement découpée. Ce type de traitement correspond notamment à la réalisation de toits ouvrants. Il peut s'agir d'un toit dont la partie mobile reste solidaire d'un cadre fixé dans la zone découpée. La partie mobile est par exemple fixée par des charnières sur un côté, permettant de soulever le côté opposé. Il peut s'agir de monter l'élément mobile sur des glissières qui permettent de dégager complètement l'ouverture ménagée dans le toit. Les mécanismes associés à ces toits ouvrants sont du type de ceux connus antérieurement. Dans ces modes de réalisation, il va de soi qu'un avantage résulte du fait que la partie mobile du toit présente, par construction, rigoureusement les mêmes qualités optiques, et la même conformation géométrique que celles du toit sur lequel elle est adaptée.

## Revendications

1. Procédé de fabrication de vitrage bombé et feuilleté, dans lequel des trous ou ouvertures (4) sont réalisés à distance des bords du vitrage après les opérations de bombage et de feuilletage, **caractérisé en ce que** leur découpe est effectuée par percement du vitrage au moyen d'un jet de fluide à haute pression contenant un matériau abrasif, le jet étant ensuite déplacé progressivement selon le dessin de la découpe à réaliser, de sorte que les parois de ces trous ou ouvertures soient droites, les bords de découpe des différentes feuilles (1,2,3) constituant ces parois étant dans le prolongement les uns des autres.

2. Procédé selon la revendication 1, dans lequel le percement et la découpe du vitrage sont réalisés dans les parties de celui-ci où les contraintes superficielles des feuilles de verre qui entrent dans sa composition sont telles qu'elles ne risquent pas de faire apparaître des fissures.

3. Procédé selon la revendication 1 ou la revendication 2, dans lequel le jet sous haute pression est un jet d'eau chargé de particules d'un matériau abrasif du groupe comprenant la silice, le quartz, le corindon, le zircon.

4. Procédé selon l'une des revendications précédentes, dans lequel le jet est émis à une pression comprise entre 50 et 150 MPa, jusqu'à l'obtention du percement du vitrage.

5. Procédé selon l'une des revendications précédentes dans lequel, une fois le percement effectué, la pression d'émission du jet est maintenue supérieure à 150 MPa.

6. Utilisation d'un vitrage (5) obtenu selon un procédé selon l'une des revendications précédentes pour la composition du toit d'un véhicule, dans lequel les trous (10) servent au passage de moyens (9) s'appuyant sur la carrosserie (7) du véhicule, pour la fixation d'éléments (13) situés au-dessus du toit.

7. Utilisation d'un vitrage (14) obtenu selon un procédé selon l'une des revendications précédentes pour la composition du toit d'un véhicule dans lequel l'ouverture (15) pratiquée consiste en la découpe d'un toit ouvrant.

## Patentansprüche

1. Verfahren zum Herstellen einer gewölbten Verbundglasscheibe bzw. laminierten Glasscheibe, bei dem Bohrungen oder Öffnungen (4) nach den Vorgängen des Wölbens und des Schichtens unter Abstand von der Scheibenkante bzw. -rand realisiert werden, **dadurch gekennzeichnet, dass** ihr Ausschneiden durch Bohren der Scheibe mittels eines Hochdruckfluidstrahls durchgeführt wird, der einen scheuernden Werkstoff bzw. Schleifmaterial enthält, wobei der Strahl anschließend allmählich nach der Zeichnung des herzustellenden Ausschnitts bewegt wird, so dass die Wände dieser Bohrungen oder Öffnungen gerade sind, wobei die Schneidränder der verschiedenen Schichten bzw. Lagen (1, 2, 3), die diese Wände bilden, in gegenseitiger Verlängerung liegen bzw. ausgerichtet sind.

2. Verfahren nach Anspruch 1, bei welchem das Bohren und das Ausschneiden der Glasscheibe in den Teilen dieser durchgeführt werden, wo die Oberflächenspannungen der Glasschichten, die zur Zusammensetzung gehören, derart sind, dass sie nicht Gefahr laufen, Risse auftreten zu lassen.

3. Verfahren nach Anspruch 1 oder 2, bei welchem der Hochdruckstrahl ein Wasserstrahl ist, der mit Partikeln eines Schleif- bzw. Scheuermaterials der Gruppe versetzt ist, die Kieselerde, Quarz, Korund und Zirkon enthält.

4. Verfahren nach einem der vorhergehenden Ansprüche, bei welchem der Strahl mit einem Druck zwischen 50 und 150 MPa bis zum Erzielen der Bohrung der Glasscheibe abgegeben wird.

5. Verfahren nach einem der vorhergehenden Ansprüche, bei welchem der Abgabedruck des Strahls nach dem Bohren auf mehr als 150 MPa gehalten wird.

6. Verwendung einer Glasscheibe (5), die gemäß einem Verfahren nach einem der vorhergehenden Ansprüche für die Zusammensetzung bzw. Ausbildung des Dachs eines Fahrzeugs erzielt wird, bei welcher die Bohrungen (10) zum Durchgehen von Mitteln (9) dienen, die sich auf der Karosserie (7) des Fahrzeugs zum Befestigen von Elementen (13), die über dem Dach liegen, abstützen.

7. Verwendung einer Glasscheibe (14), die gemäß einem Verfahren nach einem der vorhergehenden Ansprüche für die Zusammensetzung bzw. Ausbildung des Dachs eines Fahrzeugs erzielt wird, bei welcher die angelegte Öffnung (15) aus dem Ausschneiden eines Schiebedachs besteht.

## Claims

1. Process for the production of curved and laminated glazing, in which holes or openings (4) are formed at a distance from the edge of the glazing after the bending and laminating operation, **characterised in that** the cutting thereof is performed by cutting through the glazing using a high-pressure jet of fluid containing an abrasive material, the jet then being progressively moved in accordance with the design of the cut-out to be performed, so that the walls of these holes or openings are straight, the cut edges of the different sheets (1, 2, 3) forming these walls continuing on from one another.

2. Process according to Claim 1, wherein the cutting through and cutting out of the glazing are performed in the sections thereof where the surface stresses of the glass sheets, which enter into its composition, are such that they do not allow cracks to form.

3. Process according to Claim 1 or Claim 2, wherein the high-pressure jet is a jet of water laden with particles of an abrasive material from the group comprising silica, quartz, corundum, zircon.

4. Process according to one of the preceding claims, wherein the jet is discharged at a pressure in the range of between 50 and 150 MPa until the glazing has been cut through.

5. Process according to one of the preceding claims, wherein once the cut-through has been accomplished, the discharge pressure of the jet is maintained at above 150 MPa.

6. Use of a glazing (5) obtained by means of a process according to one of the preceding claims to form the roof of a vehicle, in which the holes (10) serve to allow means (9) resting against the body (7) of the vehicle to pass through to fasten elements (13) located above the roof.

7. Use of a glazing (14) obtained by means of a process according to one of the preceding claims to form the roof of a vehicle, in which the opening (15) formed comprises the cut-out of an opening roof.
